# EUROPEAN PATENT SPECIFICATION

(11) **EP 2 896 333 B1**
(45) Date of publication and mention of the grant of the patent: **24.08.2016**
(21) Application number: 14198375.9
(22) Date of filing: 16.12.2014
(51) Int. Cl.: A47J 37/12

(54) **Equipment for catering**
Gerät für die Gastronomie
Équipement pour la restauration

(30) Priority: 21.01.2014 IT MO20140012
(43) Date of publication of application: 22.07.2015
(73) Proprietor: Inox-Bim S.r.l., 47042 Cesenatico (FC) frazione Villamarina (IT)
(72) Inventor: Ionni, Fabio, 47042 Cesenatico (FC) frazione Villamarina (IT)
(74) Representative: Zoli, Filippo

(56) References cited:
- EP-A1- 2 095 750

## Description

The present invention relates to a piece of equipment for catering, particularly for the gas cooking of food.

The known types of equipment for the gas cooking of food, and particularly those for professional use, generally provide a cooking chamber for food, an outlet mouth for the combustion gases and an extractor hood of the gases themselves.

These types of equipment have various limitations, mainly related to the high fuel consumption and low efficiency.

In,particular, it should be noticed that the combustion gases generally escape from the outlet mouth at a temperature between 300°C and 500°C, with a consequent high waste of heat.

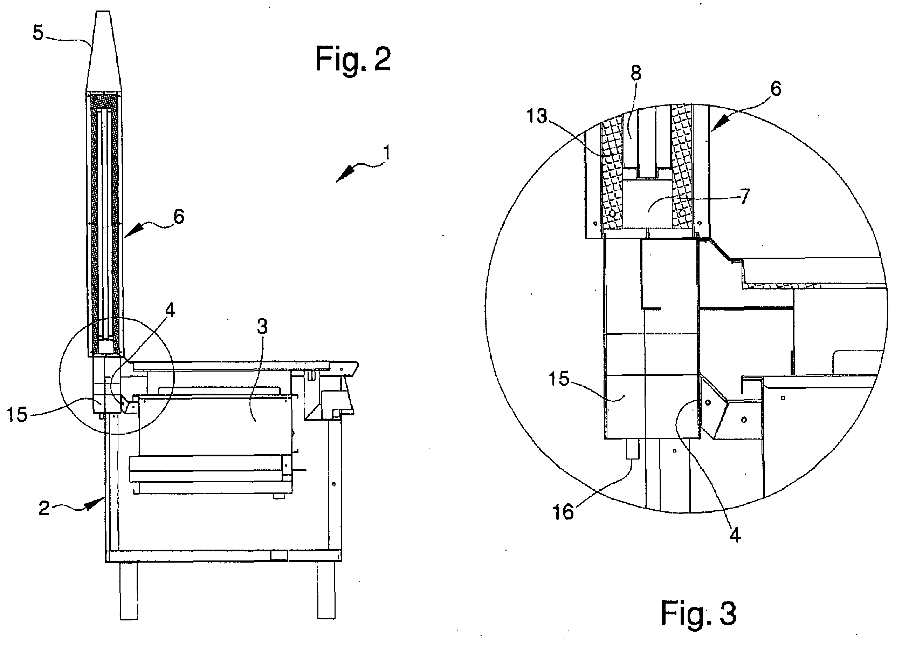

Prior art document EP-A-2 095 750 discloses an equipment for catering, comprising a machine for the gas cooking of food, having an outlet mouth for the flue gases (see Figure 3), and a hood 7 for suctioning the gases themselves; whereby it comprises a heat exchanger having a first pipe 6 for the flow of flue gases communicating on one side with said outlet mouth and on the other side with said suction hood 7, and a second pipe 9 for the flow of a working liquid and arranged side by side with said first pipe 6.

The main aim of the present invention is to provide a piece of equipment for catering, in particular for the gas cooking of food, which is more efficient than the equipment of known type and commonly employed today.

Within this aim, one object of the present invention is to reduce, with respect to the prior art, the waste of heat during the operation of the equipment itself.

One object of the present invention is to provide a piece of equipment which allows to maximize the energy efficiency of the room inside which the equipment itself is arranged.

Another object of the present invention is to provide a piece of equipment for catering which allows to overcome the mentioned drawbacks of the prior art within the ambit of a simple, rational, easy and effective to use as well as low cost solution.

The above mentioned objects are achieved by the present equipment for catering according to claim 1.

Other characteristics and advantages of the present invention will become better evident from the description of a preferred, but not exclusive, embodiment of a piece of equipment for catering, in particular for the gas cooking of food, illustrated by way of an indicative, but not limitative, example in the accompanying drawings wherein:

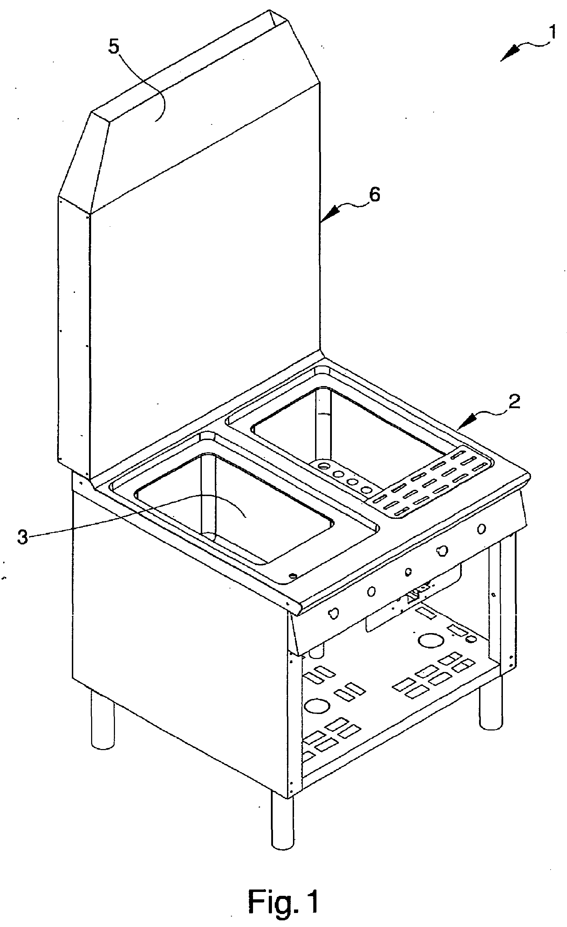

Figure 1 is an axonometric view of a piece of equipment according to the invention;
Figure 2 is a side elevation, partially sectioned, view of the equipment of Figure 1;
Figure 3 is an enlargement view of a detail of Figure 2;

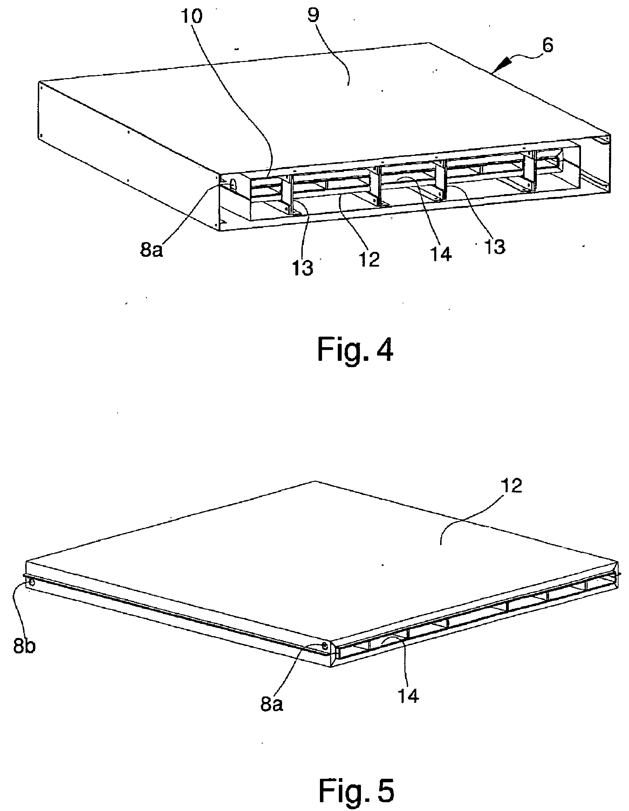

Figure 4 is an axonometric view of the heat exchanger of the equipment of Figure 1;
Figure 5 is a partial axonometric view of the heat exchanger of Figure 4;

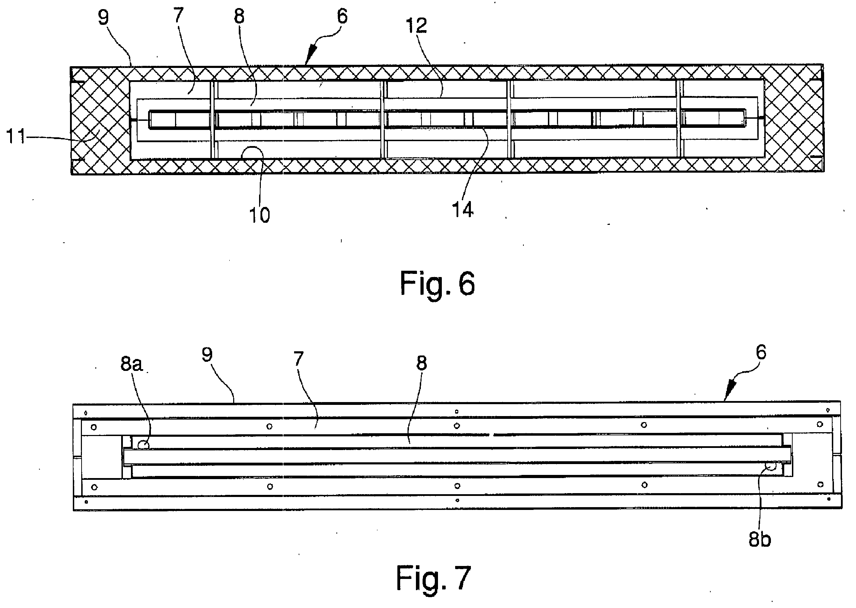

Figure 6 is a longitudinal section of the heat exchanger of Figure 4;
Figure 7 is a cross section of the heat exchanger of Figure 4.

With particular reference to these figures, globally indicated by reference number 1 is a piece of equipment for catering, particularly for the gas cooking of food.

The piece of equipment 1 comprises a machine 2 for the gas cooking of food, having a chamber 3 within which the cooking of food takes place and at least an outlet mouth 4 of the combustion gases, and at least an extractor hood 5 of the gases themselves.

According to the invention, the piece of equipment 1 comprises at least a heat exchanger 6 having at least a first pipe 7 for the passage of combustion gases, which communicates on one side with the outlet mouth 4 and on the other side with the hood 5, and at least a second pipe 8 for the passage of a working liquid, e.g. water, placed alongside the first pipe itself.

The combustion gases that escape from the outlet mouth 4 at a temperature between 300°C and 500°C are therefore able to transfer heat to the working liquid that circulates within the second pipe 8.

More particularly, the second pipe 8 has an inlet port 8a, connected to a supply line of the working liquid (not shown in the illustrations), and an outlet port 8b of the working liquid itself connected to an accumulator (also not shown in the illustrations). The working liquid enters through the inlet port 8a at a first operating temperature and exits from the outlet port 8b at a second operating temperature higher than the first above-mentioned temperature.

Advantageously, the accumulator is connectable to other user points of the room within which is arranged the equipment 1 and which require the use of hot water, such as e.g. the domestic water and space heating system.

Preferably, the first pipe 7 externally surrounds the second pipe 8.

In use, the first and the second pipes 7 and 8 extend in the vertical direction, i.e. they present a longitudinal extension axis which is arranged substantially (unless of machining and assembly tolerances) vertical.

More in detail, the heat exchanger 6 has a first boxed casing 9, which defines the external overall dimensions of the heat exchanger itself and inside which is arranged a second boxed casing 10 which externally delimits the first pipe 7.

Between the first and the second boxed casings 9 and 10 an insulating layer 11 is interposed, e.g. made of rock wool.

Inside the second boxed casing 10 is arranged a third boxed casing 12 internally delimiting the first pipe 7.

The first pipe 7 is open at its opposite longitudinal extremities, where the extremity facing, in use, downwards is placed in communication with the outlet mouth 4 while the extremity facing upwards is placed in communication with the extractor hood 5.

Between the second and the third boxed casings 10 and 11 are suitably interposed reinforcing brackets 13 able to maintain a constant passage section of the first pipe 7.

Inside the third boxed casing 12 is in turn arranged a fourth boxed casing 14 which internally delimits the second pipe 8.

As visible in detail in the illustrations, the boxed casings 9, 10, 12 and 14 have a substantially parallelepiped conformation.

The second pipe 8 is closed at its opposite longitudinal extremities and the inlet port 8a and outlet port 8b are defined at the portion of the third boxed casing 12 laterally delimiting the second pipe itself.

Alternative embodiments, however, are not ruled out, in which the inlet port 8a and the outlet port 8b are arranged differently to what described above, e.g. at the longitudinal extremities of the second pipe itself.

During the transfer of heat from the combustion gases that pass through the first pipe 7 to the working liquid passing through the second pipe 8, by effect of the lowering in temperature of the combustion gases themselves some condensate is formed inside the first pipe itself.

Advantageously, the equipment 1 also comprises a condensate collecting tray 15 communicating with the first pipe 7 and arranged below the same.

More particularly, the tray 15 is arranged below the lower extremity of the first boxed casing 9.

The tray 15 also comprises a discharge mouth 16 of the condensate accumulated in its interior.

Preferably, the piece of equipment 1 comprises measuring means (not shown in the illustrations) for measuring the temperature of the working liquid inside the second pipe 8 and operatively connected to a monitoring and control unit, not shown in the illustrations.

The piece of equipment 1 then comprises valve means (not shown in the illustrations), e.g. the type of a solenoid valve, arranged downstream of the outlet port 8b with respect to the direction of forward movement of the working liquid and operatively connected to the monitoring and control unit, which is programmed to control the opening/closing of the first valve means themselves depending on the temperature measured by the measuring means. More particularly, when the temperature of the working liquid reaches or exceeds the reference temperature settable in the programmable memory with which the monitoring and control unit is equipped, the latter operates the valve means to allow the passage the working liquid towards the accumulator.

Suitably, pumping means are also provided for pumping the working liquid towards the accumulator which are operatively connected to the monitoring and control unit, which is programmed to activate, simultaneously with the opening of the valve means, even the pumping means themselves depending on the temperature measured by the measuring means.

More in detail, when the temperature of the working liquid reaches or exceeds the reference temperature settable in the programmable memory with which the monitoring and control unit is equipped, the latter operates the pumping means so that the working liquid itself is sent to the accumulator.

The operation of the present invention is as follows.

As a result of the cooking of food, the combustion gases are discharged from the outlet mouth 4 and enter into the heat exchanger 5 (forse 6?).

More particularly, the combustion gases enter into the first pipe 7 while the working liquid is made to circulate within the second pipe 8. Inside the heat exchanger 6 the combustion gases therefore transfer heat to the working liquid, the temperature of the gases leaving the heat exchanger is therefore lower than that at input, while the temperature of the working liquid exiting the exchanger itself is higher than that at input.

It follows that, after the cooling of the combustion gases within the first pipe 7 some condensate is formed, which is then collected within the tray 15 placed below the first pipe itself.

The combustion gases escape from the heat exchanger 5 (forse 6?) and then reach the extractor hood 5, through which they are discharged in the external environment

The working liquid, on the contrary, having reached the preset reference temperature, is sent to the accumulator by means of the pumping means activated by the monitoring and control unit so it can be reused for domestic water and space heating.

It has in practice been ascertained how the described invention achieves the proposed objects and in particular the fact is underlined that the use of a heat exchanger placed between the outlet mouth of the combustion gases and the extractor hood allows to significantly reduce, compared to known equipment, the amount of wasted heat.

More particularly, the presence of the heat exchanger forming the subject of the present invention allows to exploit at least part of the heat of the combustion gases, which would otherwise be lost, for space heating and domestic water, thus maximizing also the efficiency of the equipment itself.

Furthermore, it should be noticed that the equipment forming the subject of the present invention allows to heat the space and domestic water right on request, i.e. when the space is in operation.

## Claims

1. Equipment (1) for catering, comprising:
a machine (2) for the gas cooking of food, having at least an outlet mouth (4) of the combustion gases, and at least an extractor hood (5) of the gases themselves;
at least a heat exchanger (6) having at least a first pipe (7) for the passage of combustion gases, which communicates on one side with said outlet mouth (4) and on the other side with said extractor hood (5), and at least a second pipe (8) for the passage of a working liquid and placed alongside said first pipe (7), where said first pipe (7) externally surrounds said second pipe (8);
**characterized by** the fact that
said exchanger (6) comprises at least a first boxed casing (9), externally delimiting the exchanger itself, at least a second boxed casing (10) contained in said first boxed casing (9), and externally delimiting said first pipe (7), at least a third boxed casing (12) contained in said second boxed casing (10) and internally delimiting said first pipe (7) and externally said second pipe (8), and at least a fourth boxed casing (14) contained in said third boxed casing (12) and internally delimiting said second pipe (8).

2. Equipment (1) according to claim 1, **characterized by** the fact that, in use, said pipes (7, 8) extend longitudinally in a substantially vertical direction.

3. Equipment (1) according to claim 1 or 2, **characterized by** the fact that between said first and second boxed casing (9, 10) is placed an insulating material (11).

4. Equipment (1) according to one or more of the preceding claims, **characterized by** the fact that between said second and said third boxed casing (10, 12) is placed at least a reinforcement bracket (13).

5. Equipment (1) according to one or more of the preceding claims, **characterized by** the fact that said first pipe (7) is open at its opposite longitudinal extremities.

6. Equipment (1) according to one or more of the preceding claims, **characterized by** the fact that said second pipe (8) is closed at its opposite longitudinal extremities and that has at least an inlet port (8a) and at least an outlet port (8b) of the working liquid defined on the wall of said third boxed casing (12) laterally delimiting the second pipe itself.

7. Equipment (1) according to one or more of the preceding claims, **characterized by** the fact that said second pipe (8) has an inlet port (8a) and an outlet port (8b) of the working liquid communicating with a supply line and with an accumulator respectively.

8. Equipment (1) according to one or more of the preceding claims, **characterized by** the fact that it comprises at least a condensate collecting tray (15) communicating with said first pipe (7) and arranged below the same.

9. Equipment (1) according to one or more of the preceding claims, **characterized by** the fact that it comprises measuring means of the temperature inside said second pipe (8) and operatively connected to a monitoring and control unit.

10. Equipment (1) according to one or more of the preceding claims, **characterized by** the fact that it comprises valve means, arranged along said second pipe (8) downstream of said outlet port (8b) and operatively connected to said monitoring and control unit, the latter being programmed to control the opening/closing of said valve means depending on the temperature measured by said measuring means.

11. Equipment (1) according to one or more of the preceding claims, **characterized by** the fact that it comprises pumping means of the working liquid towards said accumulator which are operatively connected to said monitoring and control unit, the latter being programmed to activate said pumping means depending on the temperature measured by said measuring means.

## Patentansprüche

1. Gerät (1) für die Gastronomie, umfassend:
eine Maschine (2) zum Garen von Lebensmitteln mit Gas, mit zumindest einer Auslassmündung (4) für die Verbrennungsgase und zumindest eine Abzugshaube (5) für die Gase selbst, zumindest einen Wärmetauscher (6) mit zumindest einem ersten Rohr (7) für den Durchtritt von Verbrennungsgasen, das auf einer Seite mit der Auslassmündung (4) und auf der anderen Seite mit der Abzugshaube (5) in Verbindung steht, sowie zumindest ein zweites Rohr (8) für den Durchtritt einer Arbeitsflüssigkeit, das entlang des ersten Rohres (7) angeordnet ist, wobei das erste Rohr (7) das zweite Rohr (8) außen umgibt,
**dadurch gekennzeichnet, dass**
der Wärmetauscher (6) zumindest ein erstes kastenförmiges Gehäuse (9), das den Wärmetauscher von außen begrenzt, zumindest ein zweites kastenförmiges Gehäuse (10), das in dem ersten kastenförmigen Gehäuse (9) aufgenommen ist und das erste Rohr (7) von außen begrenzt, zumindest ein drittes kastenförmiges Gehäuse (12), das in dem zweiten kastenförmigen Gehäuse (10) aufgenommen ist und das erste Rohr (7) von innen sowie das zweite Rohr (8) von außen begrenzt, sowie zumindest ein viertes kastenförmiges Gehäuse (14) umfasst, das in dem dritten kastenförmigen Gehäuse (12) aufgenommen ist und das zweite Rohr (8) von innen begrenzt.

2. Gerät (1) gemäß Anspruch 1, **dadurch gekennzeichnet, dass** die Rohre (7, 8) sich im Gebrauch längs in eine im Wesentlichen vertikale Richtung erstrecken.

3. Gerät (1) gemäß Anspruch 1 oder 2, **dadurch gekennzeichnet, dass** zwischen dem ersten und dem zweiten kastenförmigen Gehäuse (9, 10) ein Isoliermaterial (11) angeordnet ist.

4. Gerät (1) gemäß einem oder mehreren der vorigen Ansprüche,
**dadurch gekennzeichnet, dass** zwischen dem zweiten und dem dritten kastenförmigen Gehäuse (10, 12) zumindest eine Verstärkungsklammer (13) angeordnet ist.

5. Gerät (1) gemäß einem oder mehreren der vorigen Ansprüche,
**dadurch gekennzeichnet, dass** das erste Rohr (7) an seinen gegenüberliegenden Längsenden offen ist.

6. Gerät (1) gemäß einem oder mehreren der vorigen Ansprüche,
**dadurch gekennzeichnet, dass** das zweite Rohr (8) an seinen gegenüberliegenden Längsenden geschlossen ist und zumindest eine Einlassöffnung (8a) und zumindest eine Auslassöffnung (8b) für die Arbeitsflüssigkeit aufweist, die an der Wand des dritten kastenförmigen Gehäuses (12) definiert ist, das das zweite Rohr selbst seitlich begrenzt.

7. Gerät (1) gemäß einem oder mehreren der vorigen Ansprüche,
**dadurch gekennzeichnet, dass** das zweite Rohr (8) eine Einlassöffnung (8a) sowie eine Auslassöffnung (8b) für die Arbeitsflüssigkeit aufweist, die mit einer Versorgungsleitung bzw. einem Speicher in Verbindung stehen.

8. Gerät (1) gemäß einem oder mehreren der vorigen Ansprüche,
**dadurch gekennzeichnet, dass** es zumindest eine Kondensat-Sammelwanne (15) umfasst, die mit dem ersten Rohr (7) in Verbindung steht und unterhalt desselben angeordnet ist.

9. Gerät (1) gemäß einem oder mehreren der vorigen Ansprüche,
**dadurch gekennzeichnet, dass** es Messmittel für die Temperatur in dem zweiten Rohr (8) umfasst, die in Wirkverbindung mit einer Überwachungs- und Steuereinheit stehen.

10. Gerät (1) gemäß einem oder mehreren der vorigen Ansprüche,
**dadurch gekennzeichnet, dass** es Ventilmittel umfasst, die entlang dem zweiten Rohr (8) stromabwärts der Auslassöffnung (8b) angeordnet sind und in Wirkverbindung mit der Überwachungs- und Steuereinheit stehen, wobei letztere so programmiert ist, dass sie das Öffnen/Schließen der Ventilmittel in Abhängigkeit von der durch die Messmittel gemessenen Temperatur steuert.

11. Gerät (1) gemäß einem oder mehreren der vorigen Ansprüche,
**dadurch gekennzeichnet, dass** es Pumpmittel für die Arbeitsflüssigkeit in Richtung des Speichers umfasst, wobei die Pumpmittel in Wirkverbindung mit der Überwachungs- und Steuereinheit stehen, wobei letztere so programmiert ist, dass sie die Pumpmittel in Abhängigkeit von der durch die Messmittel gemessenen Temperatur aktiviert.

## Revendications

1. Équipement (1) pour la restauration, comprenant :
une machine (2) pour la cuisson, au gaz, d'aliments, possédant au moins une bouche de sortie (4) des gaz de combustion, et au moins une hotte aspirante (5) des gaz eux-mêmes ;
au moins un échangeur thermique (6) possédant au moins une première conduite (7) pour le passage de gaz de combustion, qui communique d'un côté avec ladite bouche de sortie (4) et de l'autre côté avec ladite hotte aspirante (5), et au moins une seconde conduite (8) pour le passage d'un liquide de travail et placée à côté de ladite première conduite (7), dans lequel ladite première conduite (7) entoure extérieurement ladite seconde conduite (8) ;
**caractérisé en ce que**
ledit échangeur (6) comprend au moins un premier boîtier enveloppant (9), délimitant extérieurement l'échangeur lui-même, au moins un second boîtier enveloppant (10), contenu dans ledit premier boîtier enveloppant (9), et délimitant extérieurement ladite première conduite (7), au moins un troisième boîtier enveloppant (12), contenu dans ledit second boîtier enveloppant (10) et délimitant intérieurement ladite première conduite (7) et extérieurement ladite seconde conduite (8), et au moins un quatrième boîtier enveloppant (14) contenu dans ledit troisième boîtier, enveloppant (12) et délimitant intérieurement ladite seconde conduite (8).

2. Équipement (1) selon la revendication 1, **caractérisé en ce que**, en utilisation, lesdites conduites (7, 8) s'étendent longitudinalement dans une direction sensiblement verticale.

3. Équipement (1) selon la revendication 1 ou 2, **caractérisé en ce que** entre ledit premier et second boîtier enveloppant (9, 10) est placé un matériau isolant (11).

4. Équipement (1) selon l'une ou plusieurs des revendications précédentes, **caractérisé en ce que** entre ledit second et ledit troisième boîtier enveloppant (10, 12) est placée au moins une équerre de renfort (13).

5. Équipement (1) selon l'une ou plusieurs des revendications précédentes, **caractérisé en ce que** ladite première conduite (7) est ouverte à ses extrémités longitudinales opposées.

6. Équipement (1) selon l'une ou plusieurs des revendications précédentes, **caractérisé en ce que** ladite seconde conduite (8) est fermée à ses extrémités longitudinales opposées et **en ce qu'**elle possède au moins un orifice d'entrée (8a) et au moins un orifice de sortie (8b) du liquide de travail définis sur la paroi dudit troisième boîtier enveloppant (12) délimitant latéralement la seconde conduite elle-même.

7. Équipement (1) selon l'une ou plusieurs des revendications précédentes, **caractérisé en ce que** ladite seconde conduite (8) possède un orifice d'entrée (8a) et un orifice de sortie (8b) du liquide de travail, en communication respectivement avec une conduite d'alimentation et avec un accumulateur.

8. Équipement (1) selon l'une ou plusieurs des revendications précédentes, **caractérisé en ce qu'**il comprend au moins un bac de récupération de condensat (15) en communication avec ladite première conduite (7) et agencé en dessous de celle-ci.

9. Équipement (1) selon l'une ou plusieurs des revendications précédentes, **caractérisé en ce qu'**il comprend des moyens de mesure de la température à l'intérieur de ladite seconde conduite (8) et opérativement connectés à une unité de contrôle et de commande.

10. Équipement (1) selon l'une ou plusieurs des revendications précédentes, **caractérisé en ce qu'**il comprend des moyens de valve, agencés sur ladite seconde conduite (8) en aval dudit orifice de sortie (8b) et opérativement connectés à ladite unité de contrôle et de commande, cette dernière étant programmée pour commander l'ouverture/fermeture desdits moyens de valve en fonction de la température mesurée par lesdits moyens de mesure.

11. Équipement (1) selon l'une ou plusieurs des revendications précédentes, **caractérisé en ce qu'**il comprend des moyens de pompage du liquide de travail vers ledit accumulateur qui sont opérativement connectés à ladite unité de contrôle et de commande, cette dernière étant programmée pour activer lesdits moyens de pompage en fonction de la température mesurée par lesdits moyens de mesure.
